# EUROPEAN PATENT APPLICATION

(11) **EP 4 745 473 A1**
(43) Date of publication of application: **20.05.2026**
(21) Application number: 24939256.4
(22) Date of filing: 07.06.2024
(51) Int. Cl.: F24F 8/192, B03C 3/70, B03C 3/66

(54) **ELECTROSTATIC AIR PURIFIER**

(30) Priority: 24.05.2024 CN 202410653242
(71) Applicant: Suzhou BeiAng Smart Technology Co., Ltd., Suzhou , Jiangsu 215000 (CN)
(72) Inventor: RAN, Hongyu, Suzhou, Jiangsu 215000 (CN); LU, Yaoyuan, Suzhou, Jiangsu 215000 (CN); LIU, Yigang, Suzhou, Jiangsu 215000 (CN); XIANG, Bing, Suzhou, Jiangsu 215000 (CN); CUI, Yongqiang, Suzhou, Jiangsu 215000 (CN); LIU, Chenchen, Suzhou, Jiangsu 215000 (CN)
(74) Representative: Chung, Hoi Kan
(86) International application number: PCT/CN2024/098114
(87) International publication number: WO 2025/241232

(57) **Abstract**

The present application provides an electrostatic air purifier, which relates to the field of air purification equipment. The electrostatic air purifier includes a housing, a high-voltage circuit control module, an electrostatic generation module, and a collection module. The high-voltage circuit control module is fixed on an outside wall of the housing. Three fixing holes are formed in the housing. The high-voltage circuit control module includes three conductive assemblies, and the three conductive assemblies respectively extend into an interior of the housing from the fixing holes. An insulating sleeve is sleeved on the conductive assembly, and the insulating sleeve abuts against a hole wall of the fixing hole. One of the conductive assemblies is connected to the electrostatic generation module, and the other two conductive assemblies are connected to the collection module. In the electrostatic air purifier of the present disclosure, an insulating sleeve is sleeved on the conductive assembly, and the insulating sleeve abuts against the hole wall of the fixing hole, thereby achieving isolation between the housing and the conductive assembly. In this way, the formation of electric spark patterns on the housing caused by electric leakage of the conductive assembly is avoided, and further, the problem of a short circuit caused by high-voltage breakdown of the housing is avoided.

## Description

### CROSS-REFERENCE TO RELATED DISCLOSURE

The present application claims priority to Chinese Patent Application No. 202410653242.4, entitled "ELECTROSTATIC AIR PURIFIER", filed with the China National Intellectual Property Administration on May 24, 2024, the entire contents of which are incorporated herein by reference.

### FIELD OF THE INVENTION

The present disclosure relates to the field of air purification equipment, and in particular, to an electrostatic air purifier.

### BACKGROUND

The core assemblies of an electrostatic air purifier are an electrostatic generation device and a particulate matter collection device. The function of the electrostatic generation device is to ionize the air by high voltage, causing the particulate matter in the air to carry a positive charge, while the particulate matter collection device is usually connected to negative high-voltage electricity, causing a negative high-voltage electric field to form inside the particulate matter collection device; when the particulate matter carrying the positive charge flows through the negative high-voltage electric field with the air, the particulate matter is adsorbed within the collection device, thereby achieving the effect of purifying the air.

Generally, the electrostatic generation device needs to be connected to a positive DC high voltage of 10-20kv, and the particulate matter collection device usually needs to be connected to a negative DC high voltage of 2-10kv. Due to the nature of the operation of the electrostatic air purifier, after operating for a period of time, the electrostatic generation device and the collection device need to be disassembled for cleaning, maintenance, or replacement due to the accumulation of collected particulate matter; therefore, the high-voltage connections of the generating device and the collection device need to be designed as structures capable of disassembly for cleaning and maintenance.

Both the electrostatic generation device and the dust collection device usually need to be installed and disassembled by means of a quick-connect type wire connection structure. Generally, the wire connection structures commonly used in the industry include two modes: an elastic sheet (or spring) to elastic sheet (or spring) contact type, and a pin to elastic sheet contact type. When the above two connection modes are adopted, the wire connection structure cannot be sealed, and under the action of high voltage ranging from several kilovolts to tens of kilovolts, electric leakage often occurs at sharp portions, creepage forms electric spark patterns on the surface of the fixed housing, and in severe cases, even high-voltage breakdown occurs, leading to a short circuit.

### SUMMARY OF THE INVENTION

In view of this, the present disclosure provides an electrostatic air purifier to solve the problems that the wire connection structure in existing electrostatic air purifiers cannot be sealed, and under the action of high voltage ranging from several kilovolts to tens of kilovolts, electric leakage often occurs at sharp portions, creepage forms electric spark patterns on the surface of the fixed housing, and in severe cases, even high-voltage breakdown occurs, leading to a short circuit.

The present disclosure provides an electrostatic air purifier. The electrostatic air purifier includes a housing, a high-voltage circuit control module, an electrostatic generation module, and a collection module, where the high-voltage circuit control module is fixed on an outside wall of the housing; and
three fixing holes are formed on the housing; the high-voltage circuit control module includes three conductive assemblies, and the three conductive assemblies respectively extend into an interior of the housing through the fixing holes; an insulating sleeve is sleeved on the conductive assembly, and the insulating sleeve abuts against a hole wall of the fixing hole; one of the conductive assemblies is connected to the electrostatic generation module, and the other two conductive assemblies are connected to the collection module.

In one or more implementations, the housing includes a first fixing plate, a second fixing plate, a third fixing plate, and a fourth fixing plate; the first fixing plate is parallel to the second fixing plate, and the third fixing plate is parallel to the fourth fixing plate; the first fixing plate, the third fixing plate, the second fixing plate, and the fourth fixing plate are sequentially connected; the high-voltage circuit control module is fixed on an outside wall of the first fixing plate facing away from the second fixing plate, and the three conductive assemblies pass through the first fixing plate and extend into the interior of the housing.

In one or more implementations, an opening is formed on the second fixing plate, so that the electrostatic generation module and the collection module are fixed onto the interior of the housing via the opening; a door body is provided to cover the opening, and the door body is detachably connected to the opening.

In one or more implementations, a first fixing strip, a second fixing strip, and a third fixing strip are provided on a side of the third fixing plate facing the fourth fixing plate, , and a first fixing strip, a second fixing strip, and a third fixing strip are also provided on a side of the fourth fixing plate facing the third fixing plate, .

In one or more implementations, the high-voltage circuit control module includes a positive DC high-voltage output terminal, a negative DC high-voltage output terminal, and a grounding output terminal; the positive DC high-voltage output terminal, the negative DC high-voltage output terminal, and the grounding output terminal are respectively connected to three conductive pins; the conductive pin that is connected to the positive DC high-voltage output terminal is connected to the electrostatic generation module, and the conductive pin that is connected to the negative DC high-voltage output terminal and the conductive pin that is connected to the grounding output terminal are connected to the collection module.

In one or more implementations, the conductive assembly includes a conductive pin, a wire connection member, and an encapsulation portion; an end portion of the conductive pin is provided with a thread; one end of the wire connection member is connected to the high-voltage circuit control module via a cable, and a threaded counterbore is formed at the other end of the wire connection member, so as to facilitate connection between a wire connection post and the conductive pin.

In one or more implementations, the wire connection member includes a first hole and a second hole; the first hole and the second hole are respectively recessed from two opposite surfaces of the wire connection member into an interior of the wire connection member; a hole wall of the first hole is provided with a thread, and the cable is inserted into the second hole.

In one or more implementations, three installation members are provided on the outside wall of the first fixing plate, and the three installation members respectively correspond to the three fixing holes; each of the installation members surrounds and defines a limiting cavity, and the limiting cavity is in communication with a corresponding fixing hole.

In one or more implementations, each of the installation members is correspondingly provided with two fixing posts, and the conductive assembly further includes a fixing cover; a conductive pin, a wire connection member, and an encapsulation portion extend into the interior of the housing through the limiting cavity and the fixing hole; the fixing cover is sleeved on exteriors of the conductive pin, the wire connection member, and the encapsulation portion, and is threadedly connected to the two fixing posts, so that the conductive assembly is fixed to the first fixing plate.

In one or more implementations, an axis of the limiting cavity coincides with an axis of the conductive assembly.

In one or more implementations, the electrostatic air purifier further includes an insulating pad. One side of the insulating pad fits against an inside wall of the housing, and the other side of the insulating pad fits against the electrostatic generation module and the collection module; the three conductive assemblies all pass through the insulating pad.

In one or more implementations, the insulating pad includes a main body portion, a first separating portion, a second separating portion, and a third separating portion; the main body portion is plate-shaped, and the first separating portion, the second separating portion, and the third separating portion are block-shaped; the first separating portion and the second separating portion are respectively connected to two ends of the main body portion, and the third separating portion is connected at a middle portion of the main body portion.

In one or more implementations, the collection module includes a collection assembly and a grounding assembly, and the electrostatic air purifier further includes three connecting members; the collection assembly, the grounding assembly, and the electrostatic generation module are respectively connected to the three conductive assemblies via the three connecting members; the three connecting members are all located on a side of the insulating pad facing away from the housing.

In one or more implementations, an installation member is provided on the outside wall of the housing, and the installation member surrounds and defines a limiting cavity; the limiting cavity is in communication with the fixing hole, the conductive assembly is connected to the housing, a portion of the conductive assembly extends into the interior of the housing through the limiting cavity and the fixing hole, and an axis of the limiting cavity coincides with an axis of the conductive assembly.

In one or more implementations, the collection assembly includes a plurality of collection plates and a first connecting strip, and the grounding assembly includes a plurality of grounding plates and a second connecting strip; the plurality of collection plates and the plurality of grounding plates are alternately arranged, the plurality of collection plates are all connected to the first connecting strip, and the plurality of grounding plates are all connected to the second connecting strip; the first connecting strip and the second connecting strip are respectively connected to two of the connecting members.

In one or more implementations, the first connecting strip includes a first frame and a plurality of first clamping members, and the plurality of first clamping members are fixed on the first frame; the plurality of first clamping members are in one-to-one correspondence with the plurality of collection plates, and the first clamping members clamp the corresponding collection plates; and
the second connecting strip includes a second frame and a plurality of second clamping members, and the plurality of second clamping members are fixed on the second frame; the plurality of second clamping members are in one-to-one correspondence with the plurality of grounding plates, and the second clamping members clamp the corresponding grounding plates.

In one or more implementations, the connecting member includes a first connecting portion, a second connecting portion, and a joining portion, and the first connecting portion and the second connecting portion are both connected to the joining portion; three joining portions included in the three connecting members are respectively connected to the collection assembly, the grounding assembly, and the electrostatic generation module, and the conductive assembly is capable of being inserted between the first connecting portion and the second connecting portion and abuts against the first connecting portion and the second connecting portion.

In one or more implementations, a middle portion of the first connecting portion protrudes toward the second connecting portion, the second connecting portion protrudes toward the middle portion of the first connecting portion, and the conductive assembly fits against the middle portion of the first connecting portion and a middle portion of the second connecting portion.

In one or more implementations, the first connecting portion includes a first groove; the first groove is formed on the middle portion of the first connecting portion, and a second groove is formed on the middle portion of the second connecting portion; the conductive assembly abuts against a groove wall of the first groove and a groove wall of the second groove.

In one or more implementations, the conductive assembly includes a conductive pin, a wire connection member, and an encapsulation portion; one end of the wire connection member is connected to the conductive pin, the other end of the wire connection member is connected to the high-voltage circuit control module, and the encapsulation portion is sleeved on an exterior of the wire connection member.

In the electrostatic air purifier of the present disclosure, three fixing holes are formed on the housing, and the high-voltage circuit control module is connected to the electrostatic generation module and the collection module inside the housing via three conductive assemblies; an insulating sleeve is sleeved on the conductive assembly, and the insulating sleeve abuts against the hole wall of the fixing hole, thereby achieving isolation between the housing and the conductive assembly. In this way, the formation of electric spark patterns on the housing caused by electric leakage of the conductive assembly is avoided, and further, the problem of a short circuit caused by high-voltage breakdown of the housing is avoided.

### BRIEF DESCRIPTION OF THE DRAWINGS

To more clearly illustrate the technical solutions of the embodiments of the present disclosure, the accompanying drawings required for use in the embodiments will be briefly described below. It should be understood that the following accompanying drawings only illustrate certain embodiments of the present disclosure and, therefore, should not be regarded as a limitation on the scope. For those of ordinary skill in the art, other relevant drawings can also be obtained based on these accompanying drawings without creative labor.
FIG. 1 illustrates a schematic structural diagram of an electrostatic air purifier according to an embodiment of the present application;
FIG. 2 illustrates an exploded view of an electrostatic air purifier according to an embodiment of the present application;
FIG. 3 illustrates a view showing the relative position of a high-voltage circuit control module and an insulating pad;
FIG. 4 illustrates an exploded view of a collection module;
FIG. 5 illustrates a view showing the relative position of a collection assembly and a grounding assembly;
FIG. 6 illustrates a schematic structural diagram of a first connecting strip;
FIG. 7 illustrates a view showing the relative position of a first connecting strip and a connecting member;
FIG. 8 illustrates a view showing the relative position of a second connecting strip and a connecting member;
FIG. 9 illustrates a cross-sectional view of an electrostatic air purifier according to an embodiment of the present application from one perspective;
FIG. 10 illustrates an enlarged view of portion A in FIG. 9;
FIG. 11 illustrates a cross-sectional view of an electrostatic air purifier according to an embodiment of the present application from another perspective;
FIG. 12 illustrates an enlarged view of portion B in FIG. 10;
FIG. 13 illustrates a view showing the relative position of a high-voltage circuit control module and a conductive assembly;
FIG. 14 illustrates an exploded view of a high-voltage circuit control module and a conductive assembly;
FIG. 15 illustrates a schematic structural diagram of a conductive assembly;
FIG. 16 illustrates an exploded view of a conductive assembly; and
FIG. 17 illustrates a cross-sectional view of a conductive assembly.

Reference numerals: 1-housing; 11-first fixing plate; 12-second fixing plate; 121-opening; 13-third fixing plate; 14-fourth fixing plate; 15-first fixing strip; 16-second fixing strip; 17-third fixing strip; 18-installation member; 19-fixing post; 2-high-voltage circuit control module; 21-positive DC high-voltage output terminal; 22-negative DC high-voltage output terminal; 23-grounding output terminal; 3-electrostatic generation module; 31-placement shell; 32-conductive filament; 33-stabilizing post; 4-collection module; 41-collection plate; 42-first connecting strip; 421-first frame; 422-first clamping member; 4221-first clamping jaw; 43-grounding plate; 44-second connecting strip; 441-second frame; 442-second clamping member; 4421-second clamping jaw; 45-first side plate; 46-second side plate; 47-top frame; 471-first fixing cavity; 472-second fixing cavity; 48-base; 5-fan; 6-conductive assembly; 61-conductive pin; 62-cable; 63-encapsulation portion; 64-fixing cover; 65-heat-shrinkable tubing; 7-insulating pad; 71-main body portion; 72-first separating portion; 73-second separating portion; 74-third separating portion; 8-connecting member; 81-first connecting portion; 811-first groove; 82-second connecting portion; 821-second groove; 83-joining portion; 91-insulating sleeve; 92-insulating plate.

### DETAILED DESCRIPTION OF THE PREFERRED EMBODIMENTS

The following specific implementations are provided to help the reader gain a comprehensive understanding of the methods, equipment, and/or systems described herein. However, after understanding the disclosure of the present disclosure, various changes, modifications, and equivalents of the methods, equipment, and/or systems described herein will be apparent. For example, the order of operations described herein is merely exemplary and is not limited to the order set forth herein, but rather, except for operations that must occur in a particular order, changes that will be apparent after understanding the disclosure of the present disclosure may be made. In addition, for clarity and conciseness, descriptions of features known in the art may be omitted.

The features described herein may be implemented in different forms and should not be construed as limited to the examples described herein. More specifically, the examples described herein are provided solely to illustrate some of the many possible ways to implement the methods, equipment, and/or systems described herein that will be apparent after understanding the disclosure of the present disclosure.

Throughout the specification, when an element (such as a layer, a region, or a substrate) is described as being "on" another element, "connected to" another element, "coupled to" another element, "over" another element, or "covering" another element, it may be directly "on" the other element, "connected to" the other element, "coupled to" the other element, "over" the other element, or "covering" the other element, or one or more other elements may be disposed therebetween. In contrast, when an element is described as being "directly on" another element, "directly connected to" another element, "directly coupled to" another element, "directly over" another element, or "directly covering" another element, there may be no other elements disposed therebetween.

As used herein, the term "and/or" includes any one of the listed related items and any combination of any two or more of the listed related items.

Although terms such as "first," "second," and "third" may be used herein to describe various members, assemblies, regions, layers, or portions, these members, assemblies, regions, layers, or portions are not limited by these terms. More specifically, these terms are only used to distinguish one member, assembly, region, layer, or portion from another member, assembly, region, layer, or portion. Thus, without departing from the teachings of the examples, a first member, assembly, region, layer, or portion described in the examples herein may also be referred to as a second member, assembly, region, layer, or portion.

For ease of description, spatial relational terms such as "over," "upper," "under," and "lower" may be used herein to describe the relationship of one element to another element as illustrated in the accompanying drawings. Such spatial relational terms are intended to encompass different orientations of the device in use or operation in addition to the orientation depicted in the accompanying drawings. For example, if the device in the accompanying drawings is flipped, then an element described as being "over" or "upper" relative to another element would subsequently be "under" or "lower" relative to the other element. Therefore, the term "over" includes both "over" and "under" depending on the spatial orientation of the device. The device may also be positioned in other ways (for example, rotated 90 degrees or in other orientations), and the spatial relational terms used herein will be interpreted accordingly.

The terms used herein are only for the purpose of describing various examples and are not intended to limit the present disclosure. Unless the context clearly indicates otherwise, the singular forms are also intended to include the plural forms. The terms "comprise," "include," "provided with", and "have" enumerate the presence of the stated features, numbers, operations, members, elements, and/or combinations thereof, but do not preclude the presence or addition of one or more other features, numbers, operations, members, elements, and/or combinations thereof.

Due to manufacturing techniques and/or tolerances, variations in the shapes shown in the accompanying drawings may occur. Therefore, the examples described herein are not limited to the specific shapes shown in the accompanying drawings, but instead include changes in shape that occur during manufacturing.

The features of the examples described herein may be combined in various ways that will be apparent after understanding the disclosure of the present disclosure. In addition, although the examples described herein have a variety of configurations, other configurations are possible, as will be apparent after understanding the disclosure of the present disclosure.

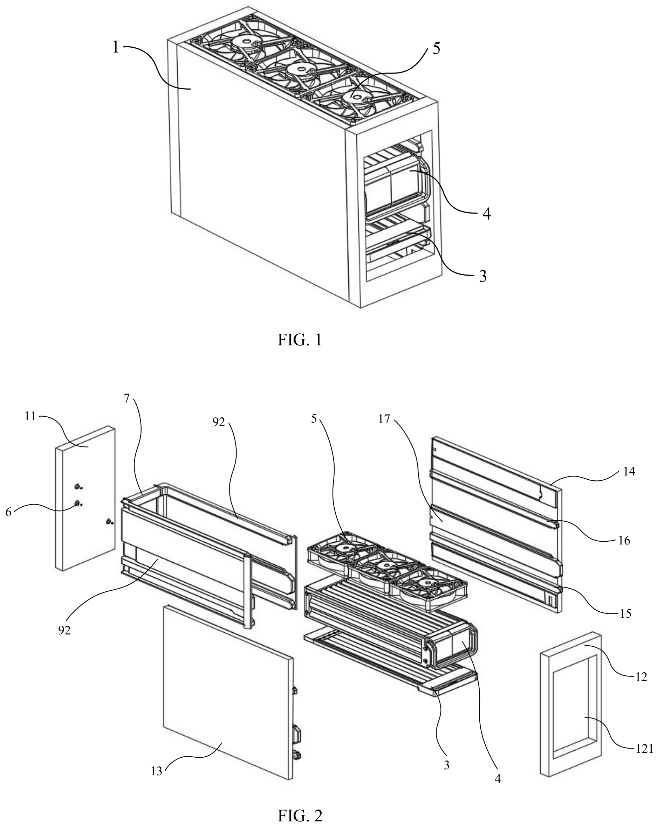

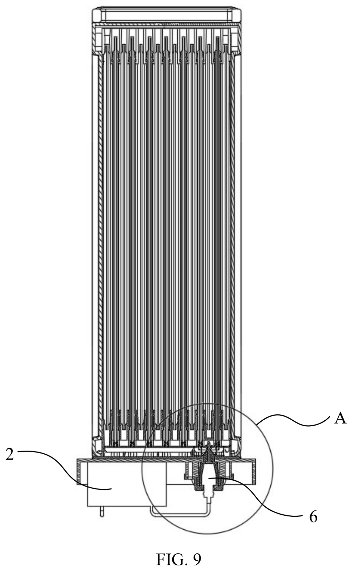

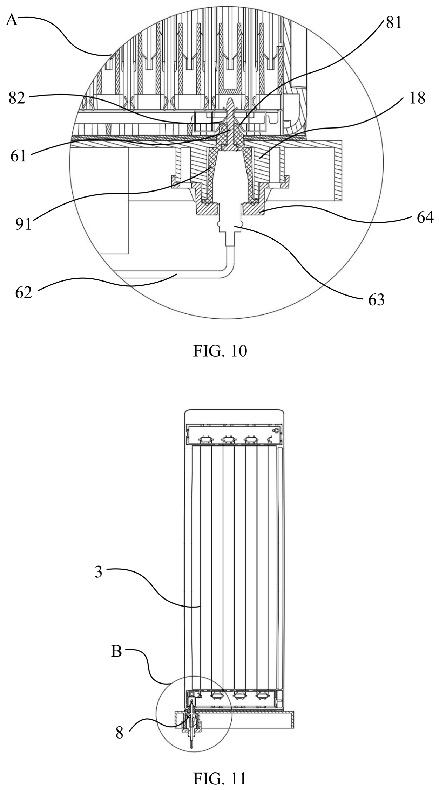

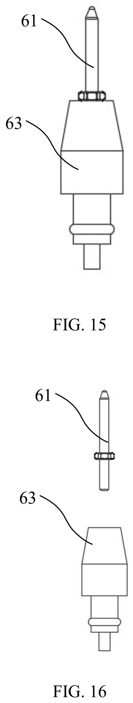

The present disclosure provides an electrostatic air purifier. As shown in FIGS. 1 to 16, the electrostatic air purifier includes a housing 1, a high-voltage circuit control module 2, an electrostatic generation module 3, and a collection module 4. The high-voltage circuit control module 2 is fixed on an outside wall of the housing 1. Three fixing holes are formed on the housing 1. The high-voltage circuit control module 2 includes three conductive assemblies 6, and the three conductive assemblies 6 respectively extend into the interior of the housing 1 through the fixing holes. An insulating sleeve 91 is sleeved on the conductive assembly 6, and the insulating sleeve 91 abuts against a hole wall of the fixing hole. One of the conductive assemblies 6 is connected to the electrostatic generation module 3, and the other two conductive assemblies 6 are connected to the collection module 4. In the electrostatic air purifier of the present disclosure, three fixing holes are formed on the housing 1, and the high-voltage circuit control module 2 is connected to the electrostatic generation module 3 and the collection module 4 inside the housing 1 via three conductive assemblies 6; an insulating sleeve 91 is sleeved on the conductive assembly 6, and the insulating sleeve 91 abuts against the hole wall of the fixing hole, thereby achieving isolation between the housing 1 and the conductive assembly 6. In this way, the formation of electric spark patterns on the housing 1 caused by electric leakage of the conductive assembly 6 is avoided, and further, the problem of a short circuit caused by high-voltage breakdown of the housing 1 is avoided.

In addition, the conductive assemblies 6 extend into the interior of the housing 1 to connect with the electrostatic generation module 3 and the collection module 4, which can avoid problems of rusting and aging caused by exposure of the conductive assemblies 6.

In the embodiments of the present disclosure, as shown in FIG. 2, the housing 1 includes a first fixing plate 11, a second fixing plate 12, a third fixing plate 13, and a fourth fixing plate 14. The first fixing plate 11 is parallel to the second fixing plate 12, and the third fixing plate 13 is parallel to the fourth fixing plate 14. The first fixing plate 11, the third fixing plate 13, the second fixing plate 12, and the fourth fixing plate 14 are sequentially connected. The high-voltage circuit control module 2 is fixed on an outside wall of the first fixing plate 11 facing away from the second fixing plate 12.

The three conductive assemblies 6 pass through the first fixing plate 11 and extend into the interior of the housing 1, so as to facilitate connection with the electrostatic generation module 3 and the collection module 4. An opening 121 is formed on the second fixing plate 12, so that the electrostatic generation module 3 and the collection module 4 can be fixed onto the interior of the housing 1 via the opening 121. A door body is provided to cover the opening 121, and the door body is detachably connected to the opening 121. A first fixing strip 15, a second fixing strip 16, and a third fixing strip 17 are provided on a side of the third fixing plate 13 facing the fourth fixing plate 14, and a first fixing strip 15, a second fixing strip 16, and a third fixing strip 17 are also provided on a side of the fourth fixing plate 14 facing the third fixing plate 13. When installing the electrostatic generation module 3, a lower end of the electrostatic generation module 3 is abutted against the two first fixing strips 15, an upper end of the electrostatic generation module 3 is abutted against the two second fixing strips 16, and thereafter, the electrostatic generation module 3 is pushed to slide until the electrostatic generation module 3 is connected to one conductive assembly 6, thereby achieving the fixation of the electrostatic generation module 3. When installing the collection module 4, a lower end of the collection generation module is abutted against two second fixing strips 16, an upper end of the collection module 4 is abutted against two third fixing strips 17, and thereafter, the collection module 4 is pushed to slide until the collection module 4 is connected to two conductive assemblies 6, thereby achieving the fixation of the collection module 4. In this way, the connection of the electrostatic generation module and the collection module 4 with conductive pins 61 can be achieved by pushing the electrostatic generation module 3 and the collection module 4, thereby improving the convenience of installation of the electrostatic generation module 3 and the collection module 4.

Further, the bottom of the housing 1 is provided with an air inlet, the top of the housing 1 is provided with an air outlet, and a fan 5 is provided on the top of the housing 1. The electrostatic air purifier is generally installed by means of a support frame, such that the bottom of the electrostatic air purifier is suspended. Driven by the fan 5, air flows into the interior of the housing 1 from the air inlet at the bottom. When passing through a high-voltage electric field formed by the electrostatic generation module 3, particulate matter carries positive charges. When flowing through a negative electric field formed by a collection device, the particulate matter is adsorbed into the interior of the collection device, and thereafter, the air flows out from the air outlet, forming an air purification effect.

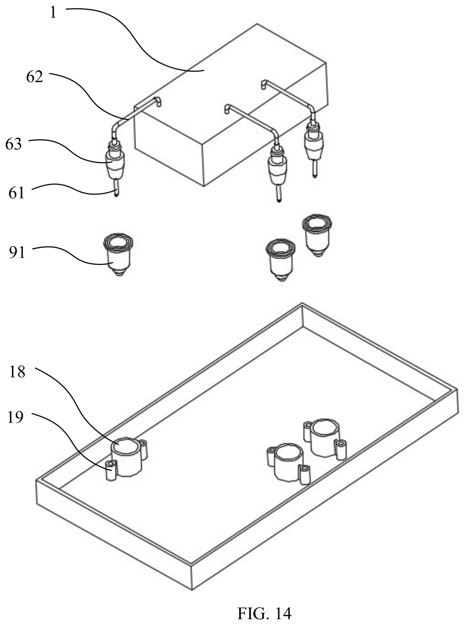

As shown in FIG. 14, the high-voltage circuit control module 2 includes a positive DC high-voltage output terminal 21, a negative DC high-voltage output terminal 22, and a grounding output terminal 23. The positive DC high-voltage output terminal 21, the negative DC high-voltage output terminal 22, and the grounding output terminal 23 are respectively connected to three conductive pins 61. The conductive pin 61 that is connected to the positive DC high-voltage output terminal 21 is connected to the electrostatic generation module 3, and the conductive pin 61 that is connected to the negative DC high-voltage output terminal 22 and the conductive pin 61 that is connected to the grounding output terminal 23 are connected to the collection module 4.

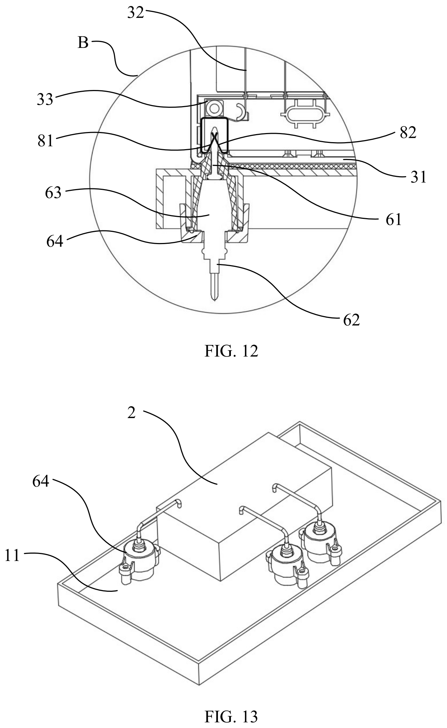

In the embodiments of the present disclosure, as shown in FIGS. 12 to 17, the conductive assembly 6 includes a conductive pin 61, a wire connection member, and an encapsulation portion 63. An end portion of the conductive pin 61 is provided with a thread. One end of the wire connection member is connected to the high-voltage circuit control module 2 via a cable 62, and a threaded counterbore is formed at the other end of the wire connection member, so as to facilitate the connection between a wire connection post and the conductive pin 61. The wire connection member and the cable 62 may be injection molded together by means of encapsulation, and the encapsulation solidifies to form the encapsulation portion 63. By providing the encapsulation portion 63, a discharge phenomenon generated at a sharp portion on the conductive pin 61 under high voltage can be avoided, the insulation and reliability of the conductive pin 61 can be greatly improved, and problems of high-voltage electrostatic leakage and creepage can be prevented.

Preferably, the encapsulation portion 63 may be formed by encapsulation injection molding of PVC (polyvinyl chloride) or Teflon. The encapsulation portion 63 formed in this way has good waterproof and dustproof effects.

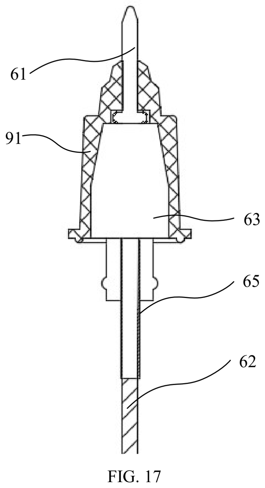

As shown in FIG. 17, the wire connection member may include a first hole and a second hole. The first hole and the second hole are respectively recessed from two opposite surfaces of the wire connection member into the interior of the wire connection member. A hole wall of the first hole is provided with a thread, thereby achieving a connection between the wire connection member and the conductive pin 61. The wire connection member is threadedly connected to the conductive pin 61, which can facilitate replacement of the conductive pin 61. The cable 62 is inserted into the second hole, thereby achieving a connection between the cable 62 and the wire connection member. The encapsulation portion 63 covers the entire wire connection member and a portion of the conductive pin 61. An insulating sleeve 91 is sleeved on the exterior of the encapsulation portion 63, and a portion of the conductive pin 61 is also covered by the insulating sleeve 91. Through the cooperation of the insulating sleeve 91 and the encapsulation portion 63, the conductive pin 61 is not exposed except for a portion used for connecting with a connecting member 8 described below, which further improves the insulation of the conductive pin 61.

In addition, the exterior of the cable 62 is sleeved with a heat-shrinkable tubing 65. The heat-shrinkable tubing 65 is sleeved on the exterior of the cable 62, a portion of the heat-shrinkable tubing 65 is located in the interior of the encapsulation portion 63, and another portion of the heat-shrinkable tubing 65 is exposed to the exterior of the encapsulation portion 63. Insulation of the cable 62 is achieved by the heat-shrinkable tubing 65. Adhesion between the heat-shrinkable tubing 65 and the encapsulation portion 63 is higher, which can avoid the appearance of a gap between the encapsulation portion 63 and the cable 62, thereby improving insulation at the connection position between the cable 62 and the wire connection member.

Further, the three cables 62 are respectively connected to the positive DC high-voltage output terminal 21, the negative DC high-voltage output terminal 22, and the grounding output terminal 23, thereby achieving the connection of the three conductive pins 61 with the positive DC high-voltage output terminal 21, the negative DC high-voltage output terminal 22, and the grounding output terminal 23.

As shown in FIGS. 13, 14, and 15, three installation members 18 are provided on the outside wall of the first fixing plate 11, and the three installation members 18 respectively correspond to the three fixing holes. Each installation member 18 surrounds and defines a limiting cavity, and the limiting cavity is in communication with a corresponding fixing hole. Each installation member 18 is correspondingly provided with two fixing posts 19. The conductive assembly 6 further includes a fixing cover 64. The conductive pin 61, the wire connection member, and the encapsulation portion 63 extend into the interior of the housing 1 through the limiting cavity and the fixing hole. The fixing cover 64 is sleeved on the exteriors of the conductive pin 61, the wire connection member, and the encapsulation portion 63, and is threadedly connected to the two fixing posts 19, thereby achieving fixation between the conductive assembly 6 and the first fixing plate 11. An axis of the limiting cavity coincides with an axis of the conductive assembly 6. By providing the installation member 18, the installation precision of the conductive assembly 6 can be improved. Meanwhile, by providing the fixing cover 64, the conductive assembly 6 is completely sealed within the installation member 18, which can effectively prevent the occurrence of leakage, discharge, and creepage phenomena from the conductive pin 61 to the first fixing plate 11, thereby improving the operational stability of the electrostatic air purifier.

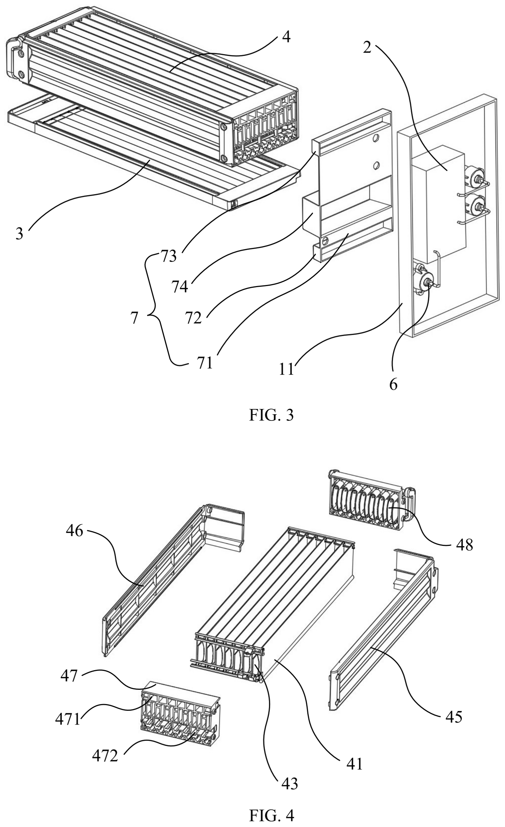

In the embodiments of the present disclosure, as shown in FIG. 3, the electrostatic air purifier further includes an insulating pad 7. One side of the insulating pad 7 fits against an inside wall of the first fixing plate 11, and the other side of the insulating pad 7 fits against the electrostatic generation module 3 and the collection module 4. The three conductive assemblies 6 all pass through the insulating pad 7, so as to facilitate the connection of the three conductive assemblies 6 with the electrostatic generation module 3 and the collection module 4. By means of the insulating pad 7, a portion of the conductive assembly 6 located between the first fixing plate 11 and the electrostatic generation module 3, and a portion of the conductive assembly 6 located between the first fixing plate 11 and the collection module 4 are insulated, which can effectively prevent overflow of high-voltage static electricity and occurrence of creepage during operation of the electrostatic air purifier.

Further, the collection module 4 includes a collection assembly and a grounding assembly. The electrostatic air purifier further includes three connecting members 8. The collection assembly, the grounding assembly, and the electrostatic generation module 3 are respectively connected to the three conductive assemblies 6 via the three connecting members 8. The three connecting members 8 are all located on a side of the insulating pad 7 facing away from the housing 1. By means of the insulating pad 7, the three connecting members 8 can be separated from the first fixing plate 11, which can avoid the overflow of high-voltage static electricity.

Optionally, the insulating pad 7 includes a main body portion 71, a first separating portion 72, a second separating portion 73, and a third separating portion 74. The main body portion 71 is plate-shaped, and the first separating portion 72, the second separating portion 73, and the third separating portion 74 are block-shaped. The first separating portion 72 and the second separating portion 73 are respectively connected to two ends of the main body portion 71, and the third separating portion 74 is connected at the middle portion of the main body portion 71. When the electrostatic generation module 3 and the collection module 4 are respectively connected to the three conductive pins 61, the electrostatic generation module 3 is located between the first separating portion 72 and the third separating portion 74, and the collection module 4 is located between the second separating portion 73 and the third separating portion 74. In addition, the electrostatic air purifier further includes two insulating plates 92, and the two insulating plates 92 fit respectively against the third fixing plate 13 and the fourth fixing plate 14, such that the insulation between the electrostatic generation module 3 and the collection module 4, and the third fixing plate 13 as well as the fourth fixing plate 14 can be realized. Optionally, the two insulating plates 92 may be integrally formed with the insulating pad 7.

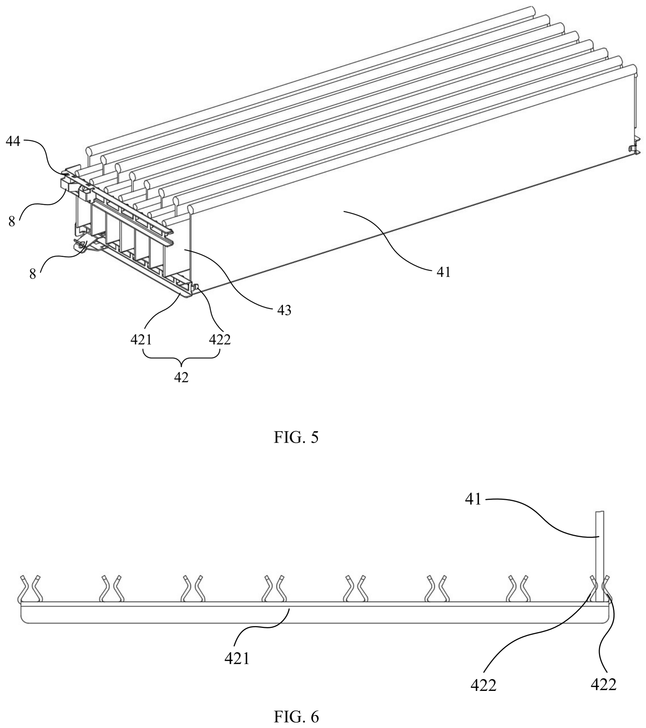

In the embodiments of the present disclosure, as shown in FIG. 5, the collection assembly includes a plurality of collection plates 41 and a first connecting strip 42, and the grounding assembly includes a plurality of grounding plates 43 and a second connecting strip 44. The plurality of collection plates 41 and the plurality of grounding plates 43 are alternately arranged; the plurality of collection plates 41 are all connected to the first connecting strip 42, and the plurality of grounding plates 43 are all connected to the second connecting strip 44. The first connecting strip 42 and the second connecting strip 44 are respectively connected to two connecting members 8. The collection plates 41 are connected to the positive DC high-voltage output terminal 21 via the first connecting strip 42, the connecting member 8 connected to the first connecting strip 42, and the conductive assembly 6 connected to the connecting member 8, and the grounding plates 43 are connected to the grounding output terminal 23 via the second connecting strip 44, the connecting member 8 connected to the second connecting strip 44, and the conductive assembly 6 connected to the connecting member 8, such that the collection module 4 forms a negative electric field.

Further, as shown in FIG. 4, the collection assembly further includes a first side plate 45, a second side plate 46, a top frame 47, and a base 48. The base 48 and the top frame 47 are located at end portions of an integral body formed by the collection plates 41 and the grounding plates 43. Two ends of the collection plates 41 are respectively supported by the top frame 47 and the base 48, and two ends of the grounding plates 43 are respectively supported by the top frame 47 and the base 48. In this way, fixation of the grounding plates 43 and the collection plates 41 is realized by means of the top frame 47 and the base 48. The top frame 47 is provided with a first fixing cavity 471 and a second fixing cavity 472. The connecting member 8 connected to the grounding assembly passes through the first fixing cavity 471 and connects to the conductive assembly 6 connected to the grounding output terminal 23; the connecting member 8 connected to the collection assembly passes through the second fixing cavity 472 and connects to the conductive assembly 6 connected to the negative DC high-voltage output terminal 22.

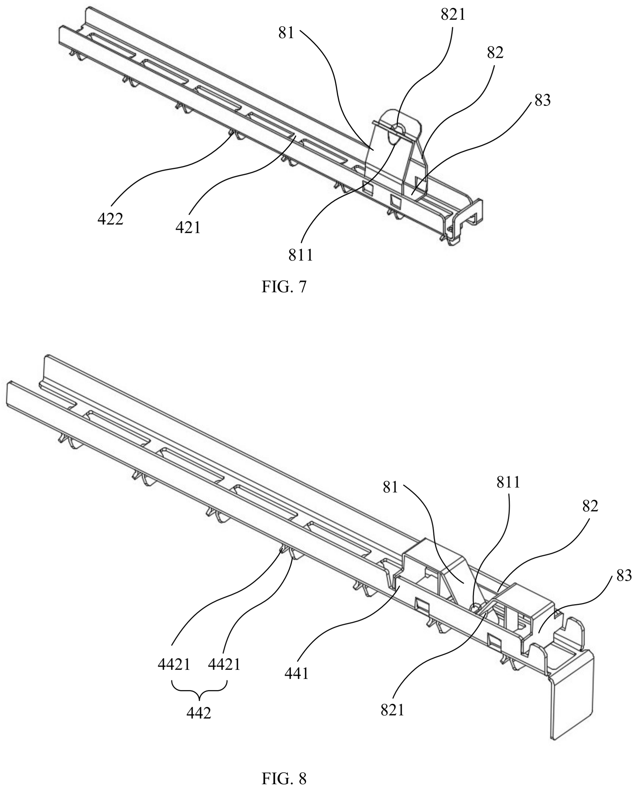

As shown in FIGS. 7 and 8, the first connecting strip 42 includes a first frame 421 and a plurality of first clamping members 422, and the first clamping members 422 are fixed on the first frame 421. The plurality of first clamping members 422 are in one-to-one correspondence with the plurality of collection plates 41, and the first clamping members 422 clamp the corresponding collection plates 41, thereby realizing the fixation of the collection plates 41 to the first connecting strip 42. The second connecting strip 44 includes a second frame 441 and a plurality of second clamping members 442, and the second clamping members 442 are fixed on the second frame. The plurality of second clamping members 442 are in one-to-one correspondence with the plurality of grounding plates 43, and the second clamping members 442 clamp the corresponding grounding plates 43, thereby realizing the fixation of the grounding plates 43 to the second connecting strip 44.

Optionally, as shown in FIGS. 6 and 8, the first clamping member 422 includes two first clamping jaws 4221. A middle portion of the first clamping jaw 4221 protrudes relative to two ends of the first clamping jaw 4221, and protruding directions of the two first clamping jaws 4221 are opposite. A distance between the middle portions of the two first clamping jaws 4221 is smaller than a thickness of the collection plate 41; when the collection plate 41 is inserted between the two first clamping jaws 4221, the two first clamping jaws 4221 form an interference fit with the collection plate 41, thereby realizing the fixation of the collection plate 41. The second clamping member 442 includes two second clamping jaws 4421. A middle portion of the second clamping jaw 4421 protrudes relative to two ends of the second clamping jaw 4421, and protruding directions of the two second clamping jaws 4421 are opposite. A distance between the middle portions of the two second clamping jaws 4421 is smaller than a thickness of the grounding plate 43; when the grounding plate 43 is inserted between the two second clamping jaws 4421, the two second clamping jaws 4421 form an interference fit with the grounding plate 43, thereby realizing the fixation of the grounding plate 43.

In the embodiments of the present disclosure, as shown in FIGS. 7 to 12, the connecting member 8 includes a first connecting portion 81, a second connecting portion 82, and a joining portion 83, and the first connecting portion 81 and the second connecting portion 82 are both connected to the joining portion 83. Three joining portions 83 included in the three connecting members 8 are respectively connected to the collection assembly, the grounding assembly, and the electrostatic generation module 3, and the conductive pin 61 can be inserted between the first connecting portion 81 and the second connecting portion 82, and abuts against the first connecting portion 81 and the second connecting portion 82. In this way, the connection of the conductive assembly 6 can be realized by inserting the conductive assembly 6 between the first connecting portion 81 and the second connecting portion 82.

Further, the first connecting portion 81, the second connecting portion 82, and the joining portion 83 are all sheet-shaped. The joining portion 83 is U-shaped, and the three joining portions 83 are respectively configured to connect with the first connecting strip 42, the second connecting strip 44, and the electrostatic generation module 3.

Optionally, as shown in FIGS. 7, 8, 11, and 12, the first connecting strip 42 may be riveted or snap-fitted to the first joining portion 83, and the second connecting strip 44 may be snap-fitted or riveted to the second joining portion 83. The electrostatic generation module 3 includes a placement shell 31, a stabilizing post 33, and a plurality of conductive filaments 32. The plurality of conductive filaments 32 are electrically connected, and a conductive filament 32 located at an edge extends to the stabilizing post 33; the third joining portion 83 is connected to the stabilizing post 33 by a bolt, so that the conductive filament 32 connects to the third joining portion 83.

A middle portion of the first connecting portion 81 protrudes toward the second connecting portion 82, and the second connecting portion 82 protrudes toward the middle portion of the first connecting portion 81. The conductive assembly 6 protrudes respectively at the middle portion of the first connecting portion 81 and a middle portion of the second connecting portion 82, and a distance between the middle portion of the first connecting portion 81 and the middle portion of the second connecting portion 82 is less than a diameter of the conductive pin 61, so as to ensure that the conductive pin 61 of the conductive assembly 6 can contact the first connecting portion 81 and the second connecting portion 82.

The first connecting portion 81 includes a first groove 811; the first groove 811 is formed in the middle portion of the first connecting portion 81, and a second groove 821 is formed in the middle portion of the second connecting portion 82. The conductive pin 61 abuts against a groove wall of the first groove 811 and a groove wall of the second groove 821, so as to increase a contact area between the conductive pin 61 and the first connecting portion 81 as well as the second connecting portion 82, thereby ensuring reliability of the connection between the connecting member 8 and the conductive assembly 6.

Optionally, the first groove 811 and the second groove 821 surround and define to form a cylindrical space; a diameter of the cylindrical space is slightly larger than the diameter of the conductive pin 61; for example, the diameter of the cylindrical space is 1 mm larger than the diameter of the conductive pin 61.

Finally, it should be noted that the above embodiments are merely intended to describe the technical solutions of the present application, rather than to limit the present application. Although the present application has been described in detail with reference to the foregoing embodiments, those of ordinary skill in the art should understand that they may still make modifications to the technical solutions described in the foregoing embodiments, or make equivalent replacements to part or all of the technical features therein; and these modifications or replacements do not make the essence of the corresponding technical solutions depart from the scope of the technical solutions of the embodiments of the present application.

### INDUSTRIAL APPLICABILITY

In the electrostatic air purifier of the present disclosure, three fixing holes are formed on the housing, and the high-voltage circuit control module is connected to the electrostatic generation module and the collection module inside the housing via three conductive assemblies; an insulating sleeve is sleeved on the conductive assembly, and the insulating sleeve abuts against the hole wall of the fixing hole, thereby achieving isolation between the housing and the conductive assembly. In this way, the formation of electric spark patterns on the housing caused by electric leakage of the conductive assembly is avoided, and further, the problem of a short circuit caused by high-voltage breakdown of the housing is avoided.

## Claims

1. An electrostatic air purifier, comprising a housing (1), a high-voltage circuit control module (2), an electrostatic generation module (3), and a collection module (4), wherein the high-voltage circuit control module (2) is fixed on an outside wall of the housing (1); and
three fixing holes are formed on the housing (1); the high-voltage circuit control module (2) comprises three conductive assemblies, and the three conductive assemblies respectively extend into an interior of the housing (1) through the fixing holes; an insulating sleeve (91) is sleeved on the conductive assembly (6), and the insulating sleeve (91) abuts against a hole wall of the fixing hole; one of the conductive assemblies is connected to the electrostatic generation module (3), and the other two conductive assemblies are connected to the collection module (4).

2. The electrostatic air purifier according to claim 1, wherein the housing (1) comprises a first fixing plate (11), a second fixing plate (12), a third fixing plate (13), and a fourth fixing plate (14); the first fixing plate (11) is parallel to the second fixing plate (12), and the third fixing plate (13) is parallel to the fourth fixing plate (14); the first fixing plate (11), the third fixing plate (13), the second fixing plate (12), and the fourth fixing plate (14) are sequentially connected; the high-voltage circuit control module (2) is fixed on an outside wall of the first fixing plate (11) facing away from the second fixing plate (12), of the first fixing plate (11), and the three conductive assemblies pass through the first fixing plate (11) and extend into the interior of the housing (1).

3. The electrostatic air purifier according to claim 2, wherein an opening (121) is formed on the second fixing plate (12), so that the electrostatic generation module (3) and the collection module (4) are fixed onto the interior of the housing (1) via the opening (121); a door body is provided to cover the opening (121), and the door body is detachably connected to the opening (121).

4. The electrostatic air purifier according to claim 2, wherein a first fixing strip (15), a second fixing strip (16), and a third fixing strip (17) are provided on a side of the third fixing plate (13) facing the fourth fixing plate (14), and a first fixing strip (15), a second fixing strip (16), and a third fixing strip (17) are also provided on a side of the fourth fixing plate (14) facing the third fixing plate (13).

5. The electrostatic air purifier according to claim 2, wherein the high-voltage circuit control module (2) comprises a positive DC high-voltage output terminal (21), a negative DC high-voltage output terminal (22), and a grounding output terminal (23); the positive DC high-voltage output terminal (21), the negative DC high-voltage output terminal (22), and the grounding output terminal (23) are respectively connected to three conductive pins (61); the conductive pin (61) that is connected to the positive DC high-voltage output terminal (21) is connected to the electrostatic generation module (3), and the conductive pin (61) that is connected to the negative DC high-voltage output terminal (22) and the conductive pin (61) that is connected to the grounding output terminal (23) are connected to the collection module (4).

6. The electrostatic air purifier according to claim 2, wherein the conductive assembly (6) comprises a conductive pin (61), a wire connection member, and an encapsulation portion (63); an end portion of the conductive pin (61) is provided with a thread; one end of the wire connection member is connected to the high-voltage circuit control module (2) via a cable (62), and a threaded counterbore is formed at the other end of the wire connection member to facilitate connection between a wire connection post and the conductive pin (61).

7. The electrostatic air purifier according to claim 6, wherein the wire connection member comprises a first hole and a second hole; the first hole and the second hole are respectively recessed from two opposite surfaces of the wire connection member into an interior of the wire connection member; a hole wall of the first hole is provided with a thread, and the cable (62) is inserted into the second hole.

8. The electrostatic air purifier according to claim 5, wherein three installation members (18) are provided on the outside wall of the first fixing plate (11), and the three installation members (18) respectively correspond to the three fixing holes; each of the installation members (18) surrounds and defines a limiting cavity, and the limiting cavity is in communication with a corresponding fixing hole.

9. The electrostatic air purifier according to claim 8, wherein each of the installation members (18) is correspondingly provided with two fixing posts (19), and the conductive assembly (6) further comprises a fixing cover (64); a conductive pin (61), a wire connection member, and an encapsulation portion (63) extend into the interior of the housing (1) through the limiting cavity and the fixing hole; the fixing cover (64) is sleeved on exteriors of the conductive pin (61), the wire connection member, and the encapsulation portion (63), and is threadedly connected to the two fixing posts (19), so that the conductive assembly (6) is fixed to the first fixing plate (11).

10. The electrostatic air purifier according to claim 8, wherein an axis of the limiting cavity coincides with an axis of the conductive assembly (6).

11. The electrostatic air purifier according to claim 1, further comprises an insulating pad (7), wherein one side of the insulating pad (7) fits against an inside wall of the housing (1), and the other side of the insulating pad (7) fits against the electrostatic generation module (3) and the collection module (4); the three conductive assemblies all pass through the insulating pad (7).

12. The electrostatic air purifier according to claim 11, wherein the insulating pad (7) comprises a main body portion (71), a first separating portion (72), a second separating portion (73), and a third separating portion (74); the main body portion (71) is plate-shaped, and the first separating portion (72), the second separating portion (73), and the third separating portion (74) are block-shaped; the first separating portion (72) and the second separating portion (73) are respectively connected to two ends of the main body portion (71), and the third separating portion (74) is connected at a middle portion of the main body portion (71).

13. The electrostatic air purifier according to claim 11, wherein the collection module (4) comprises a collection assembly and a grounding assembly, and the electrostatic air purifier further comprises three connecting members (8); the collection assembly, the grounding assembly, and the electrostatic generation module (3) are respectively connected to the three conductive assemblies via the three connecting members (8); the three connecting members (8) are all located at a side of the insulating pad (7) facing away from the housing (1).

14. The electrostatic air purifier according to claim 1, wherein an installation member (18) is provided on the outside wall of the housing (1), and the installation member (18) surrounds and defines a limiting cavity; the limiting cavity is in communication with the fixing hole, the conductive assembly (6) is connected to the housing (1), a portion of the conductive assembly (6) extends into the interior of the housing (1) through the limiting cavity and the fixing hole, and an axis of the limiting cavity coincides with an axis of the conductive assembly (6).

15. The electrostatic air purifier according to claim 13, wherein the collection assembly comprises a plurality of collection plates (41) and a first connecting strip (42), and the grounding assembly comprises a plurality of grounding plates (43) and a second connecting strip (44); the plurality of collection plates (41) and the plurality of grounding plates (43) are alternately arranged, the plurality of collection plates (41) are all connected to the first connecting strip (42), and the plurality of grounding plates (43) are all connected to the second connecting strip (44); the first connecting strip (42) and the second connecting strip (44) are respectively connected to two of the connecting members (8).

16. The electrostatic air purifier according to claim 15, wherein the first connecting strip (42) comprises a first frame (421) and a plurality of first clamping members (422), and the plurality of first clamping members (422) are fixed on the first frame (421); the plurality of first clamping members (422) are in one-to-one correspondence with the plurality of collection plates (41), and the first clamping members (422) clamp the corresponding collection plates (41); and
the second connecting strip (44) comprises a second frame (441) and a plurality of second clamping members (442), and the plurality of second clamping members (442) are fixed on the second frame (441); the plurality of second clamping members (442) are in one-to-one correspondence with the plurality of grounding plates (43), and the second clamping members (442) clamp the corresponding grounding plates (43).

17. The electrostatic air purifier according to claim 13, wherein the connecting member (8) comprises a first connecting portion (81), a second connecting portion, and a joining portion (83), and the first connecting portion (81) and the second connecting portion are both connected to the joining portion (83); three joining portions (83) in the three connecting members (8) are respectively connected to the collection assembly, the grounding assembly, and the electrostatic generation module (3), and the conductive assembly (6) is capable of being inserted between the first connecting portion (81) and the second connecting portion and abuts against the first connecting portion (81) and the second connecting portion.

18. The electrostatic air purifier according to claim 17, wherein a middle portion of the first connecting portion (81) protrudes toward the second connecting portion, the second connecting portion protrudes toward the middle portion of the first connecting portion (81), and the conductive assembly (6) fits against the middle portion of the first connecting portion (81) and a middle portion of the second connecting portion (82).

19. The electrostatic air purifier according to claim 18, wherein the first connecting portion (81) comprises a first groove (811); the first groove (811) is formed on the middle portion of the first connecting portion (81), and a second groove (821) is formed on the middle portion of the second connecting portion (82); the conductive assembly (6) abuts against a groove wall of the first groove (811) and a groove wall of the second groove (821).

20. The electrostatic air purifier according to any one of claims 1 to 19, wherein the conductive assembly (6) comprises a conductive pin (61), a wire connection member, and an encapsulation portion (63); one end of the wire connection member is connected to the conductive pin (61), the other end of the wire connection member is connected to the high-voltage circuit control module (2), and the encapsulation portion (63) is sleeved on an exterior of the wire connection member.
